Europäisches Patentamt

European Patent Office

Office européen des brevets

(19)

(11) Veröffentlichungsnummer: **0 020 715**
**B1**

(12) **EUROPÄISCHE PATENTSCHRIFT**

(45) Veröffentlichungstag der Patentschrift:
**09.05.84**

(51) Int. Cl.³: **G 21 F 9/30**, B 29 C 29/00

(21) Anmeldenummer: **80900113.4**

(22) Anmeldetag: **19.12.79**

(86) Internationale Anmeldenummer:
**PCT/EP 79/00102**

(87) Internationale Veröffentlichungsnummer:
**WO 80/01329 (26.06.80** Gazette 80/14)

(54) **VERFAHREN ZUM AUFBEREITEN VON FESTEM ROHABFALL, DER KUNSTSTOFFE SOWIE WERTVOLLE UND/ODER GEFÄHRLICHE FESTE RESTSUBSTANZEN ENTHÄLT.**

(30) Priorität: **22.12.78 DE 2855548**
**07.02.79 DE 2904627**

(43) Veröffentlichungstag der Anmeldung:
**07.01.81 Patentblatt 81/1**

(45) Bekanntmachung des Hinweises auf die Patenterteilung:
**09.05.84 Patentblatt 84/19**

(84) Benannte Vertragsstaaten:
**CH DE FR GB**

(56) Entgegenhaltungen:
**FR - A - 1 575 843**
**GB - A - 1 146 794**
**US - A - 3 205 588**
**US - A - 3 669 631**

(73) Patentinhaber: **ALKEM GMBH, Postfach 110069,
D-6450 Hanau 11 (DE)**
Patentinhaber: **Battelle-Institut e.V., Am
Römerhof 35 Postfach 900 160,
D-6000 Frankfurt/Main 90 (DE)**

(72) Erfinder: **SCHUSTER, Wilhelm, Fichardstrasse 49,
6000 Frankfurt/Main (DE)**
Erfinder: **EGGERSDORFER, Rolf, Kettelerstrasse 6,
6380 Bad Homburg (DE)**
Erfinder: **LEDEBRINK, Friedrich-Wilhelm, Dörnigheimer
Weg 32, 6457 Maintal 2 (DE)**
Erfinder: **STOLL, Wolfgang, Amaliastrasse 25,
6450 Hanau (DE)**
Erfinder: **SCHÄFER, Dieter, Am Wingert 55,
8752 Goldbach (DE)**

(74) Vertreter: **Mehl, Ernst, Dipl.-Ing., Postfach 22 01 76,
D-8000 München 22 (DE)**

**Beschreibung**

Die Erfindung betrifft ein Verfahren zum Aufbereiten von festem Rohabfall, der Kunststoffe sowie wertvolle und/oder gefährliche feste Restsubstanzen, insbesondere Uran und/oder Plutonium, enthält, durch Behandeln des Rohabfalles in einem die Kunststoffe auflösenden, insbesondere organischen Lösungsmittel und Abtrennen der unlöslichen festen Restsubstanzen aus der Kunststofflösung.

Das erfindungsgemässe Verfahren gestattet die nahezu vollständige Abtrennung und Rückgewinnung wertvoller und gefährlicher fester Restsubstanzen und ermöglicht die Deponie des von diesen Restsubstanzen befreiten Abfalls bzw. der zurückgewonnenen Restsubstanzen in Form eines raumsparenden, endlagerungsfähigen Produktes.

In der Technik werden textile Gebilde in verschiedener Form eingesetzt. Beispielsweise dienen sie als Filtermedien zur Abtrennung von festen Substanzen aus Flüssigkeiten und Abgasen. Im Labor und im Betrieb werden Fasergebilde, wie Watte, Vliese, Gewebe und Gewirke, als Tücher für die Reinigung von Geräten und Arbeitsplätzen sowie als Schutzkleidung und Verpackungsmittel verwendet. Haften an den textilen Gebilden nach dem Gebrauch wertvolle feste Substanzen an, so ist die vollständige Rückgewinnung dieser Restsubstanzen erwünscht. Handelt es sich um gefährliche Substanzen, zum Beispiel giftige oder radioaktive Stoffe, bereitet die Deponie Schwierigkeiten.

Die Abtrennung von festen Restsubstanzen aus textilen Gebilden kann zum Beispiel durch Waschen mit einer Waschlösung erfolgen. In diesem Fall sind die Restsubstanzen in geringen Konzentrationen in einem grossen Volumen Waschlösung verteilt, so dass ihre Abtrennung schwierig ist. Ferner kann auch nur ein Teil der Restsubstanzen zurückgewonnen werden. Durch Verbrennung der textilen Gebilde können lediglich thermisch beständige Substanzen isoliert werden. Dabei treten häufig eine Reihe von Problemen auf, zum Beispiel das Abtrennen der gewünschten Restsubstanzen von unerwünschten Verbrennungsrückständen, mögliche chemische Reaktionen der Restsubstanzen mit den Verbrennungsabgasen und vor allem die quantitative Entfernung der gewünschten Restsubstanzen aus dem Verbrennungsaggregat und dem Abgas.

Die technisch eingesetzten textilen Gebilde bestehen im allgemeinen aus Kunststoffen. Teilweise werden auch Naturfasern, wie Wolle und Baumwolle, oder Mineralfasern, wie Glasfasern und Asbest, verwendet. Diese Materialien sind in üblichen Lösungsmitteln schwer löslich beziehungsweise völlig unlöslich.

Der Verunreinigungsgrad der festen Rohabfälle, insbesondere aus Verarbeitungsstätten von Kernbrennstoffen, ist sehr unterschiedlich. Abfälle mit wägbaren, also stärkeren Verunreinigungen durch Spaltstoffe wie Uran oder Plutonium, entstehen fast ausschliesslich in den Handschuhboxen und machen etwa die Hälfte des gesamten Abfalls aus.

Materialmässig gesehen besteht dieser Abfall aus PVC (Polyvinylchlorid), Gummi, Polystyrol (PS), Polymethylmethacrylat (PMMA), Polyäthylen (PE), Polytetrafluoräthylen (PTFE) und anderen. Ausser diesen Kunststoffen befinden sich im Abfallmaterial auch Zellstoff und andere brennbare Naturstoffe. Quantitativ überwiegt in diesem Gemisch das PVC mit einem Anteil bis zu 70 Gew.-%.

Diese Abfälle können auf konventionelle Weise nicht beseitigt werden, da sie langlebige radiotoxische Spaltstoffe, zum Beispiel Plutonium, enthalten. Um eine gefahrlose Endlagerung der Abfälle zu erreichen, ist die Zielsetzung neuer Behandlungsverfahren die Rückgewinnung der Spaltstoffe, die Verringerung des Primärabfallvolumens und Erzeugung eines endlagerfähigen Abfallproduktes.

Bisher hat man sich in der Praxis darauf beschränkt, derartige Abfälle in Zementblöcken zu fixieren, um eine geringstmögliche Auslaugrate gegenüber Wasser oder Salzlaugen zu erreichen und in Salzstöcken endzulagern. An diesem Verfahren ist ungünstig, dass sich das Abfallvolumen erheblich erweitert und eine Plutoniumrückgewinnung zu einem späteren Zeitpunkt nicht mehr möglich ist.

Um diese Nachteile auszuschalten, wurden vornehmlich in den USA eine Reihe von Verbrennungsverfahren entwickelt, mit denen neben der Volumenreduzierung eine Konzentrierung des Spaltstoffes auf ein kleines Restvolumen, den Ascheanteil, erreicht werden sollte. Wie dem Übersichtsbericht KfK-2250 des Kernforschungszentrums Karlsruhe zu entnehmen ist, hat bisher kein Verfahren aufgrund ungelöster Schwierigkeiten Produktionsreife erlangen können.

Als Nachteil ist allen Verbrennungsverfahren gemeinsam, dass bei den erwähnten Abfällen mit hohem PVC-Gehalt die erzeugte kontaminierte Sekundärabfallmenge in fixierter endlagerfähiger Form das Ausgangsvolumen des Primärabfalles übersteigt. Bei einigen Hochtemperaturprozessen kommt erschwerend hinzu, dass während der Verbrennung das Plutonium in eine sehr schwer lösliche Form überführt wird, die die Rückgewinnung aus der Asche erheblich erschwert.

Ein Verfahren der eingangs erwähnten Art ist nun aus der britischen Patentschrift GB-A 1 146 794 bekannt. Zelluloseester, der radioaktive Ionen enthaltendes Ionentauschersalz trägt, wird nach diesem bekannten Verfahren in einem organischen Lösungsmittel gelöst. Die entstandene Lösung, in der das radioaktive Ionentauschersalz suspendiert ist, wird anschliessend gefiltert, um das radioaktive Ionentauschersalz zu entfernen.

Der vorliegenden Erfindung liegt die Aufgabe zugrunde, in Weiterbildung des bekannten Verfahrens wertvolle oder gefährliche feste Restsubstanzen in einfacher Weise fast quantitativ zurückzugewinnen. Ferner sollen gefährliche feste Restsubstanzen bzw. mit diesen kontaminierter Abfall wirksam deponiert werden können. Das Verfahren soll vor allem in der chemischen Technik, der Pharmazie, der Metallurgie und der Kerntechnik die Rückgewinnung und Entgiftung bzw. Deponie von festen Restsubstanzen ermöglichen und erleichtern.

Zur Lösung dieser Aufgabe ist ein Verfahren der eingangs erwähnten Art erfindungsgemäss dadurch gekennzeichnet, dass

a) der zum Behandeln im Lösungsmittel bestimmte Rohabfall zu Rohabfallpartikeln zerkleinert wird,

b) die im Lösungsmittel nicht auflösbaren Rohabfallpartikel aus der Kunststofflösung abgetrennt werden,

c) die unlöslichen festen Restsubstanzen zu ihrer Abtrennung aus der Kunststofflösung auszentrifugiert werden,

d) anschliessend das Lösungsmittel aus der Kunststofflösung verdampft sowie kondensiert und zum Behandeln von Rohabfall wiederverwendet wird und der verbleibende Kunststoff mit in ihm eingebetteten, entsprechend Verfahrensstufe b) abgetrennten, nicht auflösbaren Rohabfallpartikeln oder mit in ihm eingebetteten, entsprechend Verfahrensstufe c) auszentrifugierten unlöslichen Restsubstanzen verfestigt wird.

Für die Durchführung dieses Verfahrens geeignete lösliche Kunststoffe sind bekannt. Kunststoffe aus der Gruppe Polyvinylalkohol sind zum Beispiel je nach Typ in Alkoholen, Alkohol/Wasser-Gemischen oder auch in Wasser löslich. Auch Kunststoffe aus der Gruppe der Polyvinylpyrolidone sind in Alkoholen und Wasser löslich. Schliesslich sind auch Zellulosederivate in Ketonen, Keton/Wasser-Gemischen löslich. Die abzutrennenden festen Restsubstanzen sollten in dem zur Auflösung des Kunststoffes herangezogenen Lösungsmittel nicht löslich sein. Solche löslichen Kunststoffe können in technischen Aggregaten, zum Beispiel als Abgasfilter und Filter zur Abtrennung von festen Substanzen aus Flüssigkeiten, als Verpackungs- und Auskleidungsmaterialien, als Materialien für Labor- und Schutzkleidung sowie als Dekontaminationsmaterial beispielsweise bei der Herstellung, Verarbeitung und Verwendung von wertvollen oder gefährlichen Substanzen, Katalysatoren, von radioaktiven Produkten und Abfallstoffen anfallen.

Gefährliche feste Restsubstanzen, die vernichtet oder entgiftet werden müssen, fallen nach dem erfindungsgemässen Verfahren in konzentrierter Form an. Für die Deponie ergibt sich der Vorteil, dass das zu deponierende Volumen und Gewicht dadurch auf ein Mindestmass reduziert wird. Dies ist besonders wichtig für Substanzen, die nur in speziellen, in ihrer Aufnahmekapazität beschränkten Deponien gelagert werden können, zum Beispiel für radioaktive Substanzen.

Bei Rückgewinnung von festen Restsubstanzen aus festen Rohabfällen wird der Rohabfall zum Beispiel auf ca. 5 mm Korngrösse zerkleinert, derselbe bei erhöhter Temperatur in einem organischen Lösungsmittel zum Beispiel bis zur Erreichung einer Konzentration von ca. 10 Gew.-% aufgelöst, die unlöslichen Rohabfallpartikel (> 1 mm) werden abgetrennt, die ungelösten festen Restsubstanzen werden mit Hilfe einer Zentrifuge abgeschieden und das Lösungsmittel zur Rückgewinnung verdampft und kondensiert.

Das Grundprinzip dieses Verfahrens besteht also in der Auflösung des vorzerkleinerten Rohabfalles in einem organischen Lösungsmittel, so dass lediglich nach Abtrennung von unlöslichen Rohabfallpartikeln die ungelösten festen Restsubstanzen wie $UO_2$ und $PuO_2$ in fester, jedoch suspendierter Form zurückbleiben. Die Rohabfälle bestehen, wie bereits erwähnt, vornehmlich aus thermoplastischen Kunststoffen, für die mehrere geeignete organische Lösungsmittel existieren. Es gibt auch Stoffe, wie Zellstoff und Holz oder auch stark vernetzte Kunststoffe, wie zum Beispiel Neopren, die in diesen Lösungsmitteln unlöslich sind. Der Gesamtanteil dieser unlöslichen Materialien überschreitet jedoch erfahrungsgemäss nicht 25% der Gesamtabfallmenge, sie werden daher aus der Polymerlösung abgetrennt, bevor diese in Zentrifugen von festen Spaltstoffpartikeln befreit wird.

Gemäss einer Ausführungsform des erfindungsgemässen Verfahrens können die gefährlichen festen Restsubstanzen beziehungsweise die unlöslichen Rohabfallpartikel in Kunststoffe eingebunden werden, die unlöslich in Wasser oder wässrigen Lösungen sind. Dadurch wird ein Eindringen dieser Stoffe in die Biosphäre in einfacher und kostengünstiger Weise verhindert. Hierzu wird das kontaminierte Material ebenfalls in einem geeigneten Lösungsmittel gelöst. Danach wird die feste Restsubstanz aus der Kunststofflösung abgetrennt und in einem Teil des Filtrats resuspendiert. Das überschüssige Lösungsmittel wird anschliessend abdestilliert. Das entstehende Kunststoffkonzentrat, in dem die feste Restsubstanz suspendiert ist, kann in Formen oder Lagerbehälter gegossen und in an sich üblicher Weise wie Kalandrieren, Granulieren, Tablettieren, Strangpressen usw. in jede beliebige Form gebracht werden. Nach dem Aushärten werden somit Kunststoffkörper beliebiger Form mit hoher Auslaugbeständigkeit gegen wässrige Lösungen erhalten, in denen die gefährlichen Restsubstanzen eingebunden sind. Die Konzentration der Restsubstanzen in den Kunststofformkörpern ist durch das Mischungsverhältnis Restsubstanz/Kunststofflösung beliebig einstellbar.

Eine Verarbeitung der festen Restsubstanzen, beziehungsweise nicht auflösbaren Rohabfallpartikeln zu einem endlagerfähigen Produkt lässt sich an die Rückgewinnung der festen Restsubstanzen anschliessen. In der beiliegenden, lediglich einen Ausführungsweg darstellenden Zeichnung werden die einzelnen Stufen eines Verfahrens, bei denen von Rohabfällen ausgegangen wird, näher erläutert.

Die in normaler Weise aus in den Arbeitsstätten, also zum Beispiel den Arbeitsboxen in PVC-Beuteln eingeschweissten, mit Uran und/oder Plutonium verunreinigten Abfälle werden zunächst messtechnisch nach ihrem Plutoniumgehalt sortiert. Rohabfälle mit mehr als 5 g/m³ Spaltstoffgehalt eignen sich für das erfindungsgemässe Verfahren, da sich bei ihnen eine Rückführung des Spaltstoffgehaltes lohnt und empfiehlt.

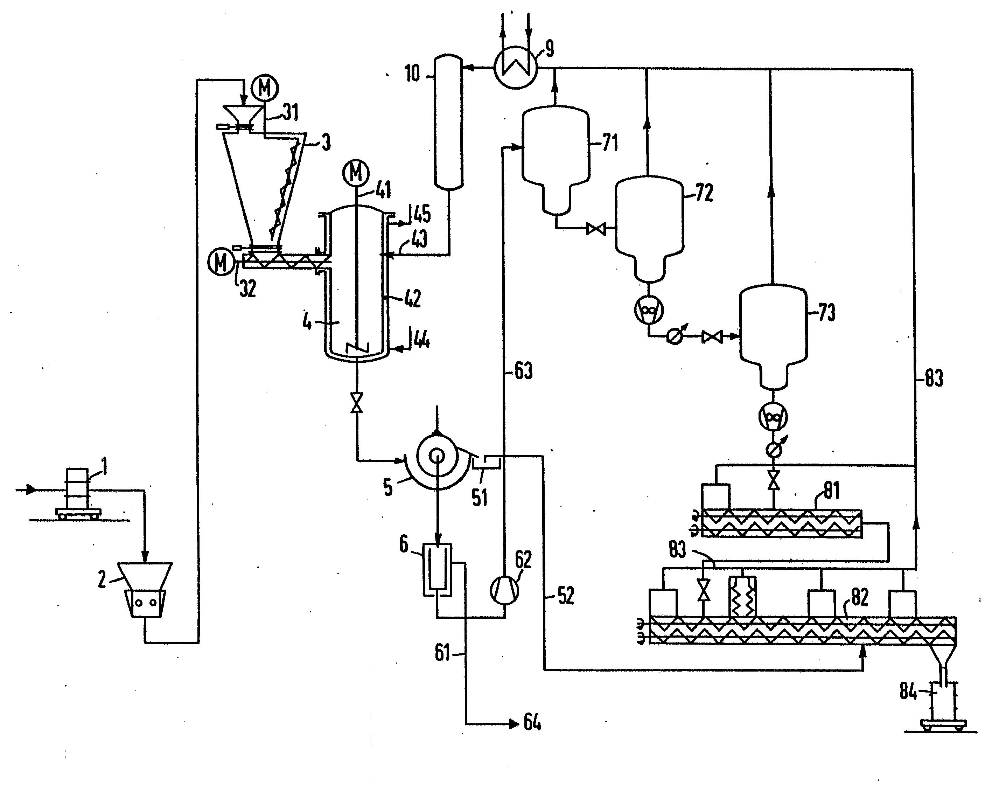

Dieser Abfall, der vorher auch noch in an sich bekannter Weise von eventuell vorhandenen Metallteilen befreit wird, wird entsprechend der Fig. 1 mit Hilfe eines Transportbehälters 1 einer Zerkleinerungsanlage 2 zugeführt. In dieser werden die Abfälle je nach verfahrenstechnischer Notwendigkeit bis auf etwa 5 mm Korngrösse zerkleinert und über eine nicht dargestellte Austragschnecke in einen Zwischenbunker 3 gelagert. Aus diesem Zwischenbunker 3 gelangen die zerkleinerten Abfälle mit Hilfe des Rührwerkes 31 und der Austragschnecke 32 in einen Kessel 4, der mit einem Rührwerk 41 versehen ist. Über die Leitung 43 wird in diesen Kessel Lösungsmittel aus dem Tank 10 zugegeben und gleichzeitig eine Erhöhung der Temperatur auf 60 bis 80 °C über einen, dem Doppelmantel 42 des Kessels zugeführten Wärmeträger vorgenommen. Dieser besteht zum Beispiel aus Wasser und wird bei 44 zu- und bei 45 abgeführt. In diesen Kessel 4 wird dabei so viel Material der Abfallmischung eingetragen, bis sich eine 10%ige Polymerlösung gebildet hat. Die für den Lösungsvorgang benötigte Zeit beträgt dabei etwa 30 Minuten.

An den Auflösungsvorgang schliesst sich dann der Separierungsschritt für die ungelösten Abfallschnitzel aus der erhitzten Polymerlösung an. Für diese groben Teile ist dazu ein Trommelfilter 5 vorgesehen, die abgeschiedenen ungelösten Abfallschnitzel werden mit Lösungsmittel nachgewaschen, abgestreift und einem Sammelbehälter 51 zugeführt. Die restliche Lösung mit den suspendierten Spaltstoffteilchen gelangt dann zu einer Zentrifuge 6, die einen Zentrifugeneffekt zwischen 15 000 und 20 000 g besitzt. In dieser sammeln sich die Spaltstoffe als fester Kuchen im Zentrifugenzylinder an. Durch die konstruktive Auslegung dieses Zentrifugenzylinders auf einen Innendurchmesser von etwa nur 80 mm wird die Kritikalitätssicherheit gewährleistet. Das Zentrifugenrohr wird nach seiner ausreichenden Spaltstoffansammlung ausgewechselt und in einem Transportbehälter der Spaltstoffaufarbeitung 64 zugeführt.

Die gereinigte Polymerlösung gelangt dann aus dieser Zentrifuge über eine Pumpe 62 zu drei in Reihe geschalteten Flashverdampfern 71, 72 und 73 und anschliessend zum Schneckenverdampfer 81. Während die Flashverdampfer die nach der Zentrifuge anfallende Konzentration der Polymerlösung von 10 auf 40 Gew.-% erhöhen, verdampft der nachgeschaltete Schneckenverdampfer den Restanteil an Lösungsmittel. Wie in diesem Beispiel gezeigt, ist es zweckmässig, dem Schneckenverdampfer 81 einen zweiten Schneckenverdampfer 82 nachzuschalten, mit diesem die Restverdampfung des Lösungsmittels bis auf einen Restgehalt von weniger als 1% durchzuführen und gleichzeitig in die aus dem Schneckenverdampfer mit ca. 160 °C austretende Polymerschmelze die im Trommelfilter 5 ausgeschiedenen ungelösten Rohabfallpartikel einzumischen.

Diese gelangen aus dem Behälter 51 über die Leitung 52 zu diesem Schneckenverdampfer 82.

Die fliessfähige Polymerschmelze mit den eingebetteten unlösbaren Rohabfallpartikeln wird alsdann in einen Transportbehälter, zum Beispiel ein 400-l-Rollreifenfass gefüllt und bildet dort nach Abkühlung einen kompakten porenfreien Kunststoffblock, in dem unter Umständen auch noch andere nicht brennbare Abfälle wie Glas, Keramik oder metallische Maschinenteile eingebettet werden können. Dieser Block stellt ein auslaugbeständiges Gebinde dar, so dass eine Zementierung nicht mehr nötig ist und somit ein endlagerfähiges Produkt vorliegt.

In den Kunststoff können gegebenenfalls mechanisch verstärkende, wärmeableitende Mittel zugesetzt werden, zum Beispiel Drahtmatten, Drahtgewebe oder Drahtabschnitte. Ferner können an sich bekannte Mittel zur Erhöhung der chemischen und mechanischen Beständigkeit der Kunststofflösung zugesetzt werden. Die aus den Verdampfern austretenden Lösungsmitteldämpfe werden über die Leitungen 83 einem Kondensator 9 zugeführt, dort verflüssigt und in den Lösungsmitteltank 10 eingeleitet, von dem sie dem Auflösungsprozess im Kessel 4 bei Bedarf wieder zugeführt werden. Es findet somit eine ständige Kreislaufführung des Lösungsmittels statt, so dass der Verbrauch an diesem äusserst gering ist. Als Lösungsmittel sind beispielsweise geeignet Tetrahydrofuran oder Methyläthylketon.

Gegenüber den bisher bekannten Verfahren hat dieses Verfahren folgende Vorteile:

1. Rückgewinnung von Plutonium und Uran ohne chemische Prozesse.
2. Keine Veränderung, das heisst Verschlechterung der Löslichkeit von $PuO_2$ und $UO_2$ während des Behandlungsprozesses im Hinblick auf deren weitere Behandlung mit Salpetersäure.
3. Keine Sekundärabfallerzeugung.
4. Das Endprodukt des Behandlungsprozesses ist endlagerungsfähig.
5. Das endlagerfähige Abfallvolumen ist gemessen am Rohabfallvolumen um etwa den Faktor 5 kleiner.
6. Über die Abluft erfolgt keinerlei Aktivitätsfreisetzung.
7. Die benötigten Apparaturen sind bekannt und erprobt.
8. Es entstehen keine Materialprobleme durch thermische Beanspruchung, da die Temperaturen unter 170 °C bleiben.
9. Durch entsprechende geometrische Dimensionierung der verwendeten Apparate ist die Kritikalitätssicherheit gewährleistet.
10. Da keine Säuren entstehen oder eingesetzt werden, gibt es auch keine Korrosionsprobleme.
11. Da keine Abgase entstehen, ist auch keine Abgasbehandlungseinrichtung notwendig.
12. Die radiolytische Gasbildung während des Prozesses ist sehr gering, da nur eine kurze Kontaktzeit des Spaltstoffes mit dem Lösungsmittel – ca. 1 Stunde – gegeben ist.

13. In Anbetracht der relativ niedrigen Temperaturen und einer Wärmekreislaufführung ist auch der benötigte Energieeinsatz gering.

## Patentansprüche

1. Verfahren zum Aufbereiten von festem Rohabfall, der Kunststoffe sowie wertvolle und/oder gefährliche feste Restsubstanzen, insbesondere Uran und/oder Plutonium, enthält, durch Behandeln des Rohabfalles in einem die Kunststoffe auflösenden, insbesondere organischen Lösungsmittel und Abtrennen der unlöslichen festen Restsubstanzen aus der Kunststofflösung, dadurch gekennzeichnet, dass

a) der zum Behandeln im Lösungsmittel bestimmte Rohabfall zu Rohabfallpartikeln zerkleinert wird,

b) die im Lösungsmittel nicht auflösbaren Rohabfallpartikel aus der Kunststofflösung abgetrennt werden,

c) die unlöslichen festen Restsubstanzen zu ihrer Abtrennung aus der Kunststofflösung auszentrifugiert werden,

d) anschliessend das Lösungsmittel aus der Kunststofflösung verdampft sowie kondensiert und zum Behandeln von Rohabfall wiederverwendet wird und der verbleibende Kunststoff mit in ihm eingebetteten, entsprechend Verfahrensstufe b) abgetrennten, nicht auflösbaren Rohabfallpartikeln oder mit in ihm eingebetteten, entsprechend Verfahrensstufe c) auszentrifugierten unlöslichen festen Restsubstanzen verfestigt wird.

2. Verfahren nach Anspruch 1, dadurch gekennzeichnet, dass die nicht auflösbaren Rohabfallpartikel oder die unlösliche feste Restsubstanz in der Kunststofflösung resuspendiert werden und der Kunststoff durch das Verdampfen des Lösungsmittels verfestigt wird.

3. Verfahren nach Anspruch 1, dadurch gekennzeichnet, dass der Kunststoff durch das Verdampfen des Lösungsmittels in eine Kunststoffschmelze übergeführt wird, in die die nicht auflösbaren Rohabfallpartikel oder die unlöslichen festen Restsubstanzen eingebettet werden und die sodann durch Abkühlen verfestigt wird.

4. Verfahren nach Anspruch 1, dadurch gekennzeichnet, dass als Lösungsmittel halogenhaltige Kohlenwasserstoffe, Tetrahydrofuran oder Ketone verwendet werden.

5. Verfahren nach Anspruch 1, dadurch gekennzeichnet, dass zum Verdampfen des Lösungsmittels in der Verfahrensstufe d) Flashverdampfer und anschliessend Schneckenverdampfer verwendet werden.

6. Verfahren nach Anspruch 1, dadurch gekennzeichnet, dass vor Entfernung des Lösungsmittels der Kunststofflösung Verstärkungsmaterialien, wärmeableitende Mittel und/oder Mittel zur Erhöhung der chemischen und mechanischen Beständigkeit zugesetzt werden.

7. Verfahren nach Anspruch 6, dadurch gekennzeichnet, dass als Verstärkungsmaterialien und wärmeableitende Mittel Drahtstücke, Drahtmatten und -geflechte verwendet werden.

## Claims

1. A method of processing solid crude waste which includes plastics materials and valuable and/or dangerous residual solid materials, in particular uranium and/or plutonium, by treating the crude waste in a solvent, in particular an organic solvent, which dissolves the plastics materials and separating the insoluble residual solid materials from the plastics material solution, characterised in that

a) the crude waste for treatment with the solvent is comminuted into crude waste particles,

b) the crude waste particles which cannot be dissolved in the solvent are separated from the plastics solution,

c) the insoluble residual solid materials are centrifuged from the plastics material solution,

d) simultaneously, the solvent is evaporated from the plastics material solution, condensed and refused for processing the crude waste, and the residual plastics material is condensed, together with crude waste particles which are embedded therein, which cannot be dissolved, or with insoluble residual solid materials which are embedded in the residual plastics material and which are centrifuged in accordance with process step c).

2. A method according to Claim 1, characterised in that the crude waste particles which cannot be dissolved and the insoluble residual solid materials are resuspended in the plastics material solution and the plastics material is solidified by evaporation of the solvent.

3. A method according to Claim 1, characterised in that by the evaporation of the solvent, the plastics material is converted into a plastics material melt, in which the crude waste particles which cannot be dissolved, or the insoluble residual solid materials are embedded, and is subsequently solidified by cooling.

4. A method according to Claim 1, characterised in that halogen-containing hydrocarbons, tetrahydrofurane, or ketones are used as solvent.

5. A method according to Claim 1, characterised in that, in order to evaporate the solvent in the process step d), flash evaporators and subsequently worm evaporators are used.

6. A method according to Claim 1, characterised in that, prior to the removal of the solvent, reinforcing materials, heat-dissipating means, and/or means for increasing the chemical and mechanical stability, are added to the plastics material solution.

7. A method according to Claim 6, characterised in that pieces of wire, wire mats and wire netting are used as reinforcing materials and heat-dissipating means.

## Revendications

1. Procédé de traitement du déchet brut solide, qui contient des matières plastiques ainsi que des substances résiduelles solides précieuses et/ou dangereuses, notamment de l'uranium et/ou du plutonium, en traitant le déchet brut dans un solvant, notamment un solvant organique, dissolvant des matières plastiques, et en séparant les substances résiduelles solides insolubles de la solution des matières plastiques, caractérisé par le fait que

a) on fragmente en particules le déchet brut destiné à être traité dans le solvant,

b) on sépare de la solution des matières plastiques les particules de déchet brut insolubles dans le solvant,

c) on élimine par centrifugation les substances résiduelles solides insolubles en vue de les séparer de la solution des matières plastiques,

d) on évapore ensuite le solvant de la solution de matières plastiques, on le condense et on le réutilise pour effectuer le traitement du déchet brut et on solidifie la matière plastique restante par des particules de déchet brut insolubles, qui y sont incorporées et qui ont été séparées lors du stade opératoire b) ou par des substances résiduelles solides insolubles qui y sont incorporées et qui ont été éliminées par centrifugation lors du stade opératoire c).

2. Procédé suivant la revendication 1, caractérisé en ce qu'il consiste à remettre les particules de déchet brut insolubles ou les substances résiduelles solides insolubles en suspension dans la solution de matière plastique et à renforcer cette dernière par évaporation du solvant.

3. Procédé suivant la revendication 1, caractérisé en ce qu'il consiste à transformer, par l'évaporation du solvant, la matière plastique en une masse fondue de matière plastique, à laquelle on incorpore les particules de déchet brut insolubles ou les substances résiduelles solides insolubles et à la solidifier ensuite par refroidissement.

4. Procédé suivant la revendication 1, caractérisé en ce qu'il consiste à utiliser comme solvant des hydrocarbures halogénés, du tétrahydrofurane ou des cétones.

5. Procédé selon la revendication 1, caractérisé en ce que, pour réaliser l'évaporation du solvant dans le stade opératoire (d), on utilise des évaporateurs flash et ensuite un évaporateur à vis.

6. Procédé selon la revendication 1, caractérisé en ce qu'il consiste à ajouter, avant l'élimination du solvant, à la solution de matière plastique des substances de renforcement, des agents servant à évacuer la chaleur et/ou des agents servant à augmenter la résistance chimique et mécanique.

7. Procédé selon la revendication 6, caractérisé en ce qu'il consiste à utiliser, comme substance de renforcement et comme agent servant à évacuer la chaleur, des tronçons de fil métallique, des nappes de fil métallique et des treillis de fil métallique.

0 020 715